# EUROPÄISCHE PATENTSCHRIFT

(11) **EP 2 011 813 B1**
(45) Veröffentlichungstag und Bekanntmachung des Hinweises auf die Patenterteilung: **09.07.2014**
(21) Anmeldenummer: 08155667.2
(22) Anmeldetag: 06.05.2008
(51) Int. Cl.: C08G 77/46, C10L 1/12

(54) **Organofunktionell modifizierte Polysiloxane und ihre Verwendung zur Entschäumung von flüssigen Kraftstoffen mit Biokraftstoffbeimischungen**
Organofunctional modified polysiloxans and their use for defoaming fluid liquids with biofuel admixtures
Polysiloxanes à organofonction modifiée et leur utilisation pour démousser des carburants liquides à l'aide de mélanges de biocarburant

(30) Priorität: 05.07.2007 DE 102007031287
(43) Veröffentlichungstag der Anmeldung: 07.01.2009
(73) Patentinhaber: Evonik Degussa GmbH, 45128 Essen (DE)
(72) Erfinder: Hänsel, Rene, 46282, Dorsten (DE); Vetter, Andreas, 45355, Essen (DE); Herrwerth, Sascha, 45134, Essen (DE); Lohse, Andrea, 46236, Bottrop (DE); Venzmer, Joachim, 45239, Essen (DE); Seidensticker, Peter, 42697 Solingen (DE)

(56) Entgegenhaltungen:
- DE-A1-102004 018 926

## Beschreibung

Die Erfindung betrifft organofunktionell modifizierte Polysiloxane und deren Verwendung zur Entschäumung von flüssigen Dieselkraftstoffen mit Biokraftstoffbeimischungen.

Die als Dieselkraftstoff verwendeten Kohlenwasserstoffgemische, die auch Aromaten, Gasöl, Kerosin und Biokraftstoffbeimischungen beinhalten können, haben die unangenehme Eigenschaft, beim Abfüllen in Vorratsbehälter, wie Lagertanks und Kraftstoffbehälter von Motorfahrzeugen, in Verbindung mit Luft, Schaum zu entwickeln. Dies führt zur Verzögerung des Abfüllvorgangs und zu unzureichender Befüllung der Behälter. Es ist deshalb üblich, dem Dieselkraftstoff Entschäumer zuzusetzen. Diese Entschäumer sollen in möglichst geringer Konzentration wirksam sein und dürfen bei der Verbrennung des Dieselkraftstoffs im Motor keine schädlichen Rückstände bilden oder die Verbrennung des Kraftstoffs negativ beeinflussen.

Entschäumer auf Polysiloxan-Basis sind in der Patentliteratur beschrieben.

Die dort beschriebenen Siliconpolyether-Copolymeren wirken, weil sie nur sehr schlecht im Dieselkraftstoff löslich sind und aufgrund ihrer oberflächenaktiven Eigenschaften an der Schaumlamelle anlagern und spreiten können. Die Destabilisierung der Schaumlamelle und damit die Entschäumung ist eine Konsequenz aus der Spreitung des Entschäumertröpfchens. Das induzierte Mitfließen der Flüssigkeit in der Schaumlamelle führt zum Ausdünnen und schließlich zur Zerstörung der Schaumlamelle. Die in den Siliconpolyether-Copolymeren enthaltene Siloxankette verschafft die notwendige niedrige Oberflächenspannung, die organischen Gruppen, als Seitenkette oder Endgruppe am Siloxan angelagert, verbessern die Kompatibilität im Diesel. Die bekannten Copolymere, die auch als Polyethersiloxane oder als organofunktionell modifizierte Polysiloxane bezeichnet und mit der allgemeinen Formel

Me₃Si(OSiMe₂)ₓ(OSiMeR)_{y}OSiMe₃

beschrieben werden, enthalten als Rest R einen Polyether, der aus Anlagerung solcher Monomeren, wie Propylenoxid, jedoch häufiger Ethylenoxid, an Startalkohole, wie Allylalkohol, entsteht.

Die GB-B-2 173 510 betrifft ein Verfahren zum Entschäumen von Dieselkraftstoff oder Jet Fuel, wobei dem Kraftstoff ein auf einem Siliconpolyether-Copolymer beruhendes Antischaummittel zugegeben wird, dessen Polyether mit der allgemeinen Formel Q(A)ₙOZ beschrieben wird. Q repräsentiert eine difunktionelle Gruppe, welche an einem Si-Atom gebunden ist, A eine Oxyalkylengruppe, bei der mindestens 80 % Oxyethyleneinheiten sind und Z ein Wasserstoffatom oder eine andere monofunktionelle Gruppe.

Ein Nachteil dieses Antischaummittels besteht in der schlechten Entschäumung von feuchtem Dieselkraftstoff. Unter feuchtem Dieselkraftstoff versteht man einen Kraftstoff, der 250 ppm Wasser oder mehr beinhaltet. Dieses Wasser ist entweder Kondenswasser, welches in den Lagertanks in den Kraftstoff gelangt, oder es wird während des Transportes in Öltankern - durch die nicht vollständige Entleerung der Tanks von Wasser - in den Kraftstoff eingetragen.

In DE-A-10 2004 018 926 wird der Einsatz von organomodifizierten Polysiloxanen als Dieselentschäumer beschrieben, die insbesondere zur Entschäumung von feuchtem Dieselkraftstoff geeignet sind. Als organomodifizierte Polysiloxane werden Polysiloxane der allgemeinen Formel 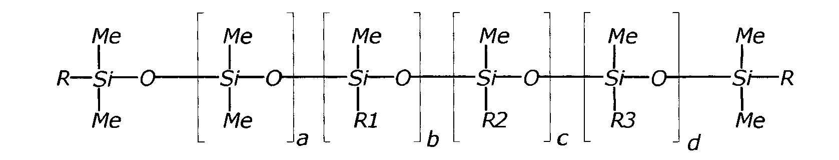 eingesetzt, wobei
- N: a + b + c + d + 2 = 140 bis 200, bevorzugt 150 bis 180,
- a: 100 bis 170, bevorzugt 110 bis 140,
- b: 6 bis 25, bevorzugt 8 bis 15,
- c: 0,5 bis 25, bevorzugt 2 bis 12,
- d: 6 bis 25, bevorzugt 8 bis 15,
ist, die Reste R unabhängig voneinander Methylgruppen oder R1, R2 oder R3 sind, mit der Maßgabe, dass mindestens 50 % der Reste R keine Methylgruppen sind, die Reste R1 unabhängig voneinander gleiche oder verschieden hydrophobe Polyetherreste der allgemeinen Formel 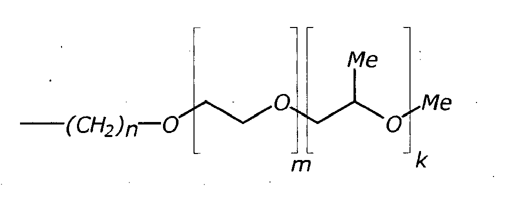 sind, mit der Maßgabe, dass das Molekulargewicht des Polyethers größer als 1000 g/mol und der Anteil an Propylenoxid größer 50 % ist, wobei
- n: 3 bis 6,
- m: 0 bis 30,
- k: 10 bis 40,
ist, die Reste R2 unabhängig voneinander gleiche oder verschieden butylenoxidhaltige Polyetherreste der allgemeinen Formel 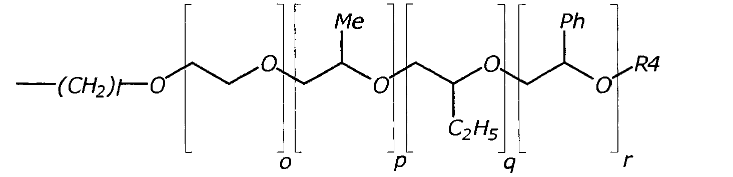 sind, wobei
- 1: 3 bis 6,
- o: 0 bis 30,
- p: 0 bis 25,
- q: 1 bis 30,
- r: 0 bis 30
und R4 unabhängig voneinander gleiche oder verschiedene Reste aus der Gruppe Methyl oder Wassestoff sind, die Reste R3 unabhängig voneinander gleiche oder verschiedene Phenolderivate der allgemeinen Formel 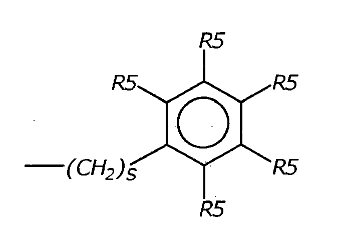 sind, wobei R5 unabhängig voneinander gleiche oder verschiedene Reste aus der Gruppe, Alkyl, Wassestoff, Hydroxy oder Alkoxy sind, mit der Maßgabe, dass mindestens ein Rest R5 eine Hydroxy-Gruppe ist (bevorzugtes Phenolderivat ist o-Allylphenol).

In der DE-C-43 43 235 wird ein Verfahren zur Entschäumung von Dieselkraftstoff beschrieben, wobei organofunktionell modifizierte Polysiloxane der allgemeinen Formel 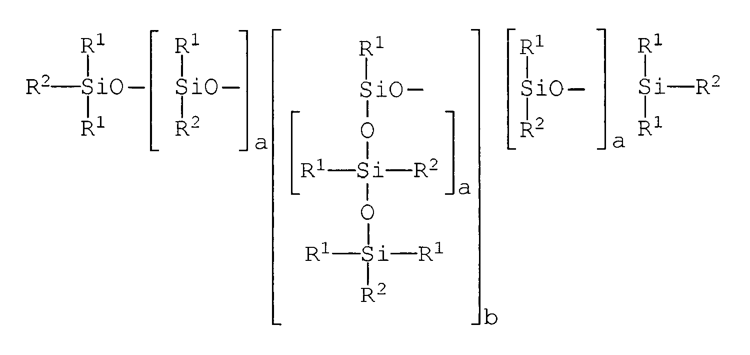 verwendet werden, wobei
die Reste R¹ Alkyl- oder Arylreste sind,
die Reste R² aus mehreren der nachfolgenden Verbindungsklassen ausgewählt sind: Butenderivate, Alkanolderivate, Polyether und Alkylreste. Diese Butylenderivate und Polyether enthalten Oxyalkylen- und Oxypropyleneinheiten in verschiedener Zusammensetzung.

Auch US 5,542,690 und US 5,334,227 beschreiben die Verwendung von Organopolysiloxanen zur Entschäumung von Dieselkraftstoff. Dabei werden Polysiloxan-Terpolymere als Dieselentschäumer eingesetzt, die die Struktur MDₓD*_{y}D**₂M aufweisen, mit M = O_{0.5}Si(CH₃)₃, D = OSi (CH₃) ₂, D* = OSi(CH₃)R, mit R = einem Polyether, D** = OSi(CH₃)R', mit R' = Phenolderivat und x+y+z = 35 bis 350, x/(y+z) = 3 bis 6 and y/z = 0,25 bis ca. 9,0. Die in US 5,334,227 beschriebenen Organopolysiloxane enthalten Polyether, die zu mehr als 75 % aus Ethylenoxid-Einheiten bestehen und keine Butylenoxid-Einheiten aufweisen.

In DE-C-195 16 360 wird ein Verfahren zur Entschäumung von Dieselkraftstoff beschrieben, wobei organofunktionell modifizierte Polysiloxane der allgemeinen Formel 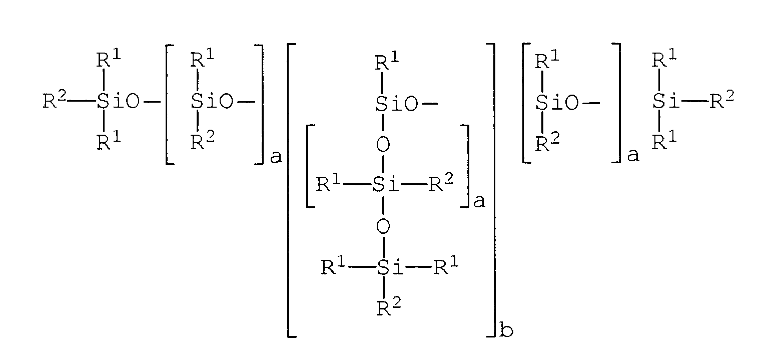 mit a = 1 bis 400 und b = 0 bis 10, verwendet werden, wobei die Reste R¹ Alkyl- oder Arylreste sind, die Reste R² so ausgewählt sind, dass sie dem Rest R¹ gleichen, jedoch mindestens 10 % gleich einem Phenolderivat sind und weitere 10 % aus mehreren der nachfolgenden Verbindungsklassen ausgewählt sind: Butylenderivate, Alkanolderivate und Alkylreste. Optional kann ein Polyether verwendet werden, der aus den Monomeren Ethylenoxid und Propylenoxid sowie einem Startalkohol aufgebaut ist.

In EP-A-0 849 352 wird ein Verfahren zur Entschäumung von Dieselkraftstoff beschrieben, wobei aromatische Reste enthaltende Siliconpolyether-Copolymere der allgemeinen Formel 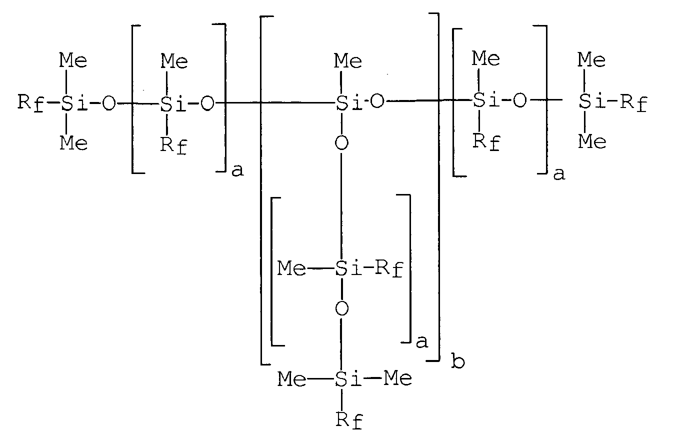 mit b = 0 bis 8 und a = 0 bis 100, wenn b = 6 bis 8, a = 0 bis 200, wenn b = 3 bis 6 und a = 0 bis 300, wenn b = 0 bis 3 ist, verwendet werden, wobei die Reste R_{f} Alkyl- oder Arylreste sind, jedoch mindestens 80 % der Reste R_{f} Methylreste sind. R_{f} ist entweder gleich R¹, wobei R¹ ein Alkylrest mit 1 bis 4 C-Atomen oder ein Arylrest ist, mit der Maßgabe, dass 80 % der Reste R_{f} Methylreste sind, oder gleich R² oder R³, mit der Maßgabe, dass mindestens ein Rest R_{f} der Rest R² ist, wobei R² ein Polyetherrest der Formel

-(Y)_{c}[O(C₂H_{4-d}R'_{d}O)ₘ(CₓH₂ₓO)ₚZ]_{w}

ist, mit Y = ein (w+1)-bindiger Kohlenwasserstoffrest mit 1 bis 18 C-Atomen und Z = Wasserstoff oder ein einwertiger organischer Rest, mit der Maßgabe, dass pro Copolymermolekül mindestens ein Rest R' einen gegebenenfalls substituierten Aromaten bezeichnet. Dabei ist c gleich 0 oder 1, d liegt zwischen 1 und 3, m ist größer oder gleich 1, x ist eine ganze Zahl zwischen 2 und 4, p ist größer oder gleich 1, w liegt zwischen 1 und 4 und die Summe m + p liegt zwischen 3 und 100.
R³ ist ein aromatenfreier Polyetherrest der Formel

-(F)_{q}[O(CₓH₂ₓO)ᵣZ]₉

wobei g zwischen 1 und 4 betragen kann, q gleich 0 oder 1 ist, x zwischen 2 und 4 liegt, r größer oder gleich 3 ist, F ein g-bindiger Kohlenwasserstoffrest ist, der auch verzweigt sein kann, und Z wie oben definiert.

Dabei sollen mehr als 65 % der Siliconpolyethercopolymere einen aromatenhaltigen Polyether enthalten.

In der DE-A-197 26 653 wird die Entschäumung von Dieselkraftstoffen mit Polysiloxanen der allgemeinen Formel 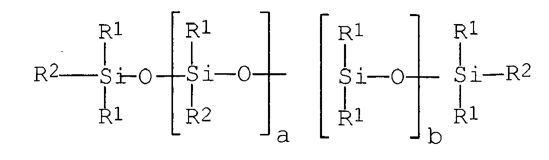 beschrieben, wobei
- R¹: Alkylreste mit 1 bis 4 Kohlenstoffatomen oder Arylreste sind, jedoch mindestens 80 % der Reste R¹ Methylreste sind,
- R²: die Reste R^{2A}, R^{2B} und R^{2C} bedeuten,
wobei die Reste R^{2A} aus folgenden Resten ausgewählt sind:
(a) ein Phenylderivat mit der allgemeinen Formel

   -R³-(C₆H_{4-z}R⁴_{z})-OR⁵

   wobei
   - R³: ein zweiwertiger Rest ist, der aus einem oder mehreren Kohlenwasserstoffresten mit 1 bis 18 Kohlenstoffatomen zusammengesetzt ist, die gegebenenfalls substituiert sind,
   - R⁴: ein Hydroxyrest, ein Alkylrest mit 1 bis 6 Kohlenstoffatomen oder ein Alkoxyrest mit 1 bis 6 Kohlenstoffatomen ist, und
   - z: eine Zahl von 0 bis 4 ist,
   - R⁵: ein einwertiger Rest ist, der gleich oder verschieden ist und aus einem Wasserstoffrest oder Alkylrest mit 1 bis 6 Kohlenstoffatomen besteht,
(b) ein Polyetherrest der allgemeinen Formel

   -(Y)[O(C₂H₄-_{d}R⁶_{d}O)ₘ(CₓH₂ₓO)ₚZ]_{w}

   ist,
   mit der Bedeutung
   - d: 1 bis 3,
   - m: ≥ 1,
   - x: 2 bis 4,
   - p: ≥ 1,
   - w: 1 bis 4,
   - Summe m + p: = 3 bis 100,
   - R⁶: ein Wasserstoffrest, ein einwertiger Kohlenwasserstoffrest mit 1 bis 18 Kohlenstoffatomen, der auch aromatisch und gegebenenfalls auch ein substituierter Aromat sein kann, dessen Substituenten aus den Gruppen Wasserstoffrest, Alkylrest mit 1 bis 6 Kohlenstoffatomen, Alkoxyrest und Hydroxyrest ausgewählt sind, wobei die Reste R⁶ unterschiedlich sein können, jedoch pro Copolymermolekül mindestens ein Rest R⁶ einen gegebenenfalls substituierten Aromaten bezeichnet,
   - Z: ein Wasserstoffrest oder ein einwertiger organischer Rest,
   - Y: ein (w + 1)-bindiger Kohlenwasserstoffrest, der auch verzweigt sein kann,
   die Reste R^{2B} aus folgenden Resten ausgewählt sind:
(c) ein Alkenderivat mit der allgemeinen Formel 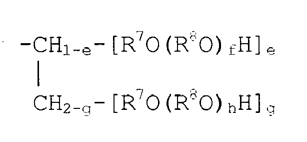 wobei
   - R⁷: einen Rest der Formel -CR⁹H- bedeutet mit R⁹ gleich Wasserstoffatom oder einwertiger organischer Rest,
   - R⁸: einen Rest der Formel C₂H_{4-d}R¹⁰_{d} bedeutet mit
   R¹⁰ Wasserstoffatom oder einwertiger Kohlenwasserstoffrest mit 1 bis 18 Kohlenstoffatomen, der auch aromatisch und gegebenenfalls auch ein substituierter Aromat sein kann, dessen Substituenten aus den Gruppen Wasserstoffrest, Alkylrest mit 1 bis 6 Kohlenstoffatomen, Alk- oxyrest und Hydroxyrest ausgewählt sind, wobei die Reste R¹⁰ unterschiedlich sein können,
   - e: und g jeweils 0 oder 1 sind, wobei die Summe e + g 1 oder 2 ist,
   - f und h: jeweils 0 oder eine ganze Zahl sind, wobei die Summe f + h durchschnittlich 0 bis 14 ist,
(d) der Rest -(CH₂-)ᵢOR¹¹,
   wobei
   - R¹¹: ein Wasserstoff- oder ein einwertiger organischer Rest,
   - i: eine Zahl von 2 bis 20 ist,
(e) der Rest - (CH₂-) ⱼCH₃,
   wobei
   - j: eine Zahl von 5 bis 30 ist,
(f) der Rest R^{2C} der Rest

   - (CH₂-)ₖ(OC₂H₄-)₁(OC₃H₃-)ₙOR¹²

   ist, wobei
   - R¹²: ein Wasserstoff- oder ein einwertiger organischer Rest,
   - k: eine Zahl von 2 bis 6,
   - l: eine Zahl von 1 bis 50,
   - n: eine Zahl von 0 bis 20 ist,
mit der Maßgabe, dass mindestens 10 % der Reste R² gleich dem Rest R^{2A} sind,
wobei mindestens 10 % der Reste R^{2A} gleich dem Rest (a) sind und mindestens 10 % gleich dem Rest (b) sind,
die Summe a + b eine Zahl von 2 bis 400 und das Verhältnis der Zahlen b/a zwischen 0,2 und 20 liegt.

Die Entschäumer werden üblicherweise in den Kraftstoff in Verbindung mit Additivpaketen eingearbeitet. Diese Additivpakete werden dem rohen Diesel zu seiner Eigenschaftsverbesserung zugesetzt. Unter Additivpaketen versteht man Mischungen verschiedener Zusatzstoffe, wie z.B. Mittel zur Verbesserung des Verbrennungsverhaltens, Mittel zur Verminderung der Rußbildung, Mittel zur Verringerung der Bildung schädlicher Abgase, Inhibitoren zur Verringerung der Korrosion im Motor und seinen Teilen, grenzflächenaktive Substanzen, Schmiermittel und dergleichen. Derartige Additivpakete sind z.B. in der GB-A-2 248 068 und in der Zeitschrift Mineralöltechnik 37(4), 20 ff. beschrieben. Die Zusätze des Additivpaketes sind dabei in einem organischen Lösungsmittel zu einem Stammkonzentrat gelöst, das dem rohen Dieselkraftstoff zugesetzt wird.

In neuerer Zeit werden Dieselkraftstoffen Biokraftstoffe beigemischt. Laut DIN EN 590 darf Dieselkraftstoff bis zu fünf Prozent FAME (Fettsäuremethylester) enthalten. Seit Anfang 2004 wird die Beimischung von Biokraftstoff (auch als Biodiesel bezeichnet) in Deutschland praktiziert. Nach Abstimmung mit der Automobilindustrie wird nur FAME mit dem Ausgangsprodukt Raps (RME) verwendet - also keine anderen, laut Gesetz ebenfalls zulässigen Stoffe. Ein Dieselkraftstoff mit z.B. 5 % FAME Beimischung wird als B 5-Diesel bezeichnet.

Im Stand der Technik finden sich keine Informationen darüber, ob die dort beschriebenen Entschäumer zur Entschäumung von Dieselkraftstoffen, die Biokraftstoffbeimischungen enthalten, geeignet sind. Auf Grund des unterschiedlichen Lösevermögens war es zudem nicht zu erwarten, dass organofunktionell modifizierte Siloxane gemäß dem Stand der Technik als Entschäumer für Dieselkraftstoffe, die Biokraftstoffbeimischungen enthalten, geeignet sein könnten.

Aufgabe der vorliegenden Erfindung war deshalb die Bereitstellung von Entschäumern, die zur Entschäumung von Dieselkraftstoffen geeignet sind, die Biokraftstoffbeimischungen enthalten.

Überraschenderweise wurde gefunden, dass Entschäumer, die auf Organopolysiloxanen gemäß Formel I bzw. Ia basieren, besonders gut zur Entschäumung von Dieselkraftstoffen geeignet sind, die Biokraftstoffbeimischungen enthalten.

Gegenstand der vorliegenden Erfindung sind deshalb organomodifizierte Polysiloxane der Formel Ia wie in Anspruch 1 beschrieben sowie Kraftstoffzusammensetzungen, die organomodifizierte Polysiloxane der Formel I als Entschäumer enthalten, wie sie in Anspruch 3 beschrieben werden.

Durch die Verwendung der organomodifizierten Polysiloxane gemäß Formel I bzw. Ia als Entschäumer können nun auch Dieselkraftstoffe entschäumt werden, die Biokraftstoffbeimischungen aufweisen. Eine solche Entschäumung ist mit anderen Organopolysiloxanen nach dem Stand der Technik nur schlecht oder sogar gar nicht möglich. Insbesondere bei einer Erhöhung des Anteils Biokraftstoff im Dieselkraftstoff verringert sich die Effektivität der herkömmlichen Entschäumer zunehmend, was sich z. B. in einer höheren Anfangsschaumhöhe und einer verringerten Entschäumerwirkung nach Lagerung äußert.

Die Verwendung der erfindungsgemäßen Entschäumer hat außerdem den Vorteil, dass sowohl in trockenem als auch in feuchtem Dieselkraftstoff eine ausgezeichnete langzeitstabile Entschäumung erreicht wird. Unter feuchtem Dieselkraftstoff wird ein Dieselkraftstoff verstanden, der etwa 250 ppm Wasser oder mehr, insbesondere 250 bis 1000 ppm Wasser, enthält.

Insbesondere ist es durch die Verwendung von organomodifizierten Polysiloxane der Formel I bzw. Ia möglich auch Dieselkraftstoffe mit Biokraftstoffbeimischungen zu entschäumen, denen größere Mengen als den heute erlaubten 5 % FAME beigemischt sind.

Zudem weisen die organomodifizierten Polysiloxanen der Formel I bzw. Ia eine ausgezeichnete Verträglichkeit mit Additivpaketen auf, welche üblicherweise Dieselkraftstoffen, insbesondere solchen mit Biokraftstoffbeimischungen, zugesetzt werden.

Die erfindungsgemäßen organomodifizierte Polysiloxane sowie Kraftstoffzusammensetzungen, die organomodifizierte Polysiloxane enthalten, werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen, wie z. B. organomodifizierte Polysiloxane, beschrieben, die verschiedene Einheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als Mittelwert, gemittelt über alle entsprechenden Verbindungen, zu verstehen.

Die organomodifizierten Polysiloxane gemäß der Erfindung zeichnen sich dadurch aus, dass sie der allgemeinen Formel Ia genügen 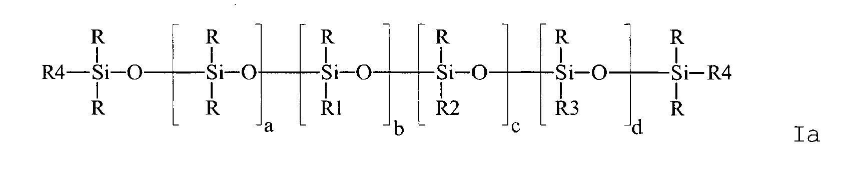 wobei
- N: a + b + c + d + 2 = 60,5 bis 1000, bevorzugt 120 bis 250,
- a: 50 bis 960, bevorzugt 80 bis 200, besonders bevorzugt 100 bis 190,
- b: 4 bis 85, bevorzugt 6 bis 25, besonders bevorzugt 10 bis 20,
- c: 0,5 bis 85, bevorzugt 0,5 bis 10, besonders bevorzugt 0,5 bis 8,
- d: 4 bis 85, bevorzugt 8 bis 50, besonders bevorzugt 10 bis 20,
sind,
die Reste R unabhängig voneinander gleiche oder verschiedene, aliphatische oder aromatische Kohlenwasserstoffreste mit 1 bis 10 C-Atomen sind, vorzugsweise Methylgruppen,
die Reste R1 unabhängig voneinander gleiche oder verschiedene Polyetherreste der allgemeinen Formel IIa sind, mit der Maßgabe, dass sowohl eine statistische als auch eine blockweise Anordnung der Oxyalkylen-Einheiten vorliegen kann, 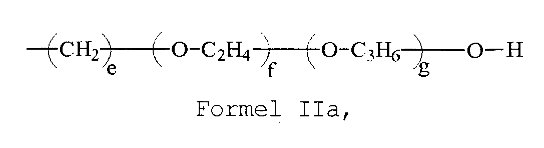 wobei
- e: 3 bis 11, vorzugsweise 3,
- f: 0 bis 60, vorzugsweise 1 bis 20,
- g: 0 bis 60, vorzugsweise 10 bis 30,
vorzugsweise mit der Maßgabe, dass das Molekulargewicht des Polyethers größer als 1000 g/mol, vorzugsweise von größer 1000 g/mol bis 2000 g/mol und der Anteil an Propylenoxid größer 50 %, bevorzugt größer 65 % ist,
sind,
die Reste R2 unabhängig voneinander gleiche oder verschiedene butylenoxidhaltige Polyetherreste der allgemeinen Formel IIIa sind, mit der Maßgabe, dass sowohl eine statistische als auch eine blockweise Anordnung der Oxyalkylen- und gegebenenfalls Styroloxid-Einheiten vorliegen kann, 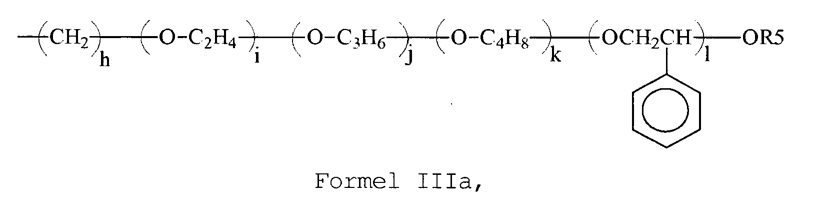 wobei
- h: 3 bis 11, vorzugsweise 3 bis 6, bevorzugt 3,
- i: 0 bis 60, vorzugsweise 1 bis 30,
- j: 0 bis 65, vorzugsweise 0 bis 20,
- k: 1 bis 60, vorzugsweise 2 bis 10,
- 1: 0 bis 60, vorzugsweise 0 bis 30, bevorzugt 0,
die Reste R5 sind unabhängig voneinander gleich oder verschieden und bedeuten Methyl-, Acetyl- oder Wasserstoffrest, bevorzugt Wasserstoff- oder Methylrest, besonders bevorzugt Wasserstoffrest,
die Reste R3 unabhängig voneinander gleiche oder verschiedene Phenolderivate der allgemeinen Formel IVa sind 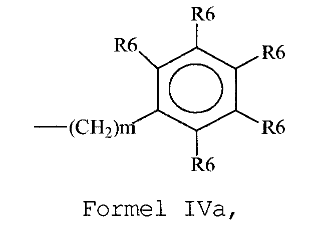 R6 sind unabhängig voneinander gleiche oder verschiedene Reste aus der Gruppe Alkyl, Wasserstoff, Hydroxy oder Alkoxy, mit der Maßgabe, dass mindestens ein Rest R6 eine Hydroxygruppe ist, wobei der Index m eine ganze Zahl von 3 bis 11 ist,
und
die Reste R4 unabhängig voneinander gleiche oder verschiedene Reste R, R1, R2 oder R3 sind.

Besonders bevorzugte Verbindungen der Formel Ia sind solche, bei denen N = a + b + c + d + 2 = 120 bis 250 ist, a = 100 bis 190 ist, b = 10 bis 20 ist, c = 0,5 bis 8 ist, d = 10 bis 20 ist, die Reste R Methylgruppen sind, die Reste R1 gleiche oder verschiedene Polyetherreste der allgemeinen Formel IIa sind, wobei e = 3 ist, f = 1 bis 20 ist, g = 10 bis 30 ist, mit der Maßgabe, dass das Molekulargewicht des Polyetherrests von größer 1000 g/mol, vorzugsweise größer 1000 bis 2000 g/mol und der Anteil an Propylenoxid größer 65 % ist, die Reste R2 gleiche oder verschiedene butylenoxidhaltige Polyetherreste der allgemeinen Formel IIIa sind, wobei h = 3 ist, i = 1 bis 30, j = 0 bis 20, k = 2 bis 10, 1 = 0 und die Reste R5 Wasserstoffreste sind.

Die erfindungsgemäßen organomodifizierten Polysiloxane gemäß Formel Ia können insbesondere als Entschäumer für Kraftstoffzusammensetzungen, die Dieselkraftstoff oder Heizöl und vorzugsweise Biokraftstoff enthalten, eingesetzt werden.

Die erfindungsgemäßen Kraftstoffzusammensetzungen enthaltend Dieselkraftstoff oder Heizöl (also fossile Kraftstoffkomponenten), Biokraftstoff und zumindest einen Entschäumer, zeichnen sich dadurch aus, dass als Entschäumer organomodifizierte Polysiloxane der allgemeinen Formel (I) enthalten sind, 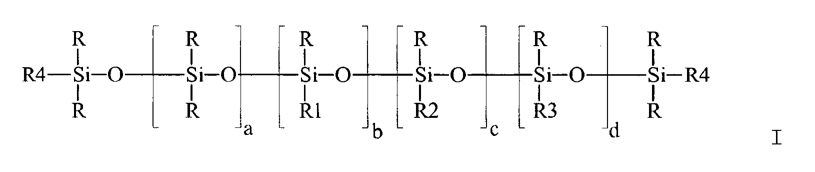 wobei
- N: a + b + c + d + 2 = 60,5 bis 1000, bevorzugt 120 bis 250,
- a: 50 bis 960, bevorzugt 80 bis 200, besonders bevorzugt 100 bis 190
- b: 4 bis 85, bevorzugt 6 bis 25, besonders bevorzugt 10 bis 20,
- c: 0,5 bis 85, bevorzugt 0,5 bis 10, besonders bevorzugt 0,5 bis 8
- d: 4 bis 85, bevorzugt 8 bis 50, besonders bevorzugt 10 bis 20
sind,
die Reste R unabhängig voneinander gleiche oder verschiedene, aliphatische oder aromatische Kohlenwasserstoffreste mit 1 bis 10 C-Atomen sind, vorzugsweise Methylgruppen,
die Reste R1 unabhängig voneinander gleiche oder verschiedene Polyetherreste der allgemeinen Formel II sind, mit der Maßgabe, dass sowohl eine statistische als auch eine blockweise Anordnung der Oxyalkylen-Einheiten vorliegen kann, 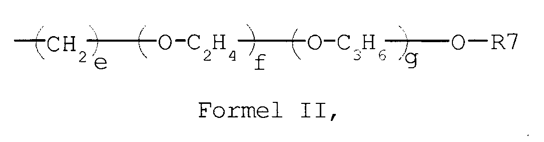 wobei
- e: 3 bis 11, vorzugsweise 3,
- f: 0 bis 60, vorzugsweise 1 bis 20,
- g: 0 bis 60, vorzugsweise 10 bis 30,
- R7: H, Acetyl oder Methyl, vorzugsweise H,
vorzugsweise mit der Maßgabe, dass das Molekulargewicht des Polyethers größer als 1000 g/mol, vorzugsweise von 1000 bis 2000 g/mol und der Anteil an Propylenoxid größer 50 %, bevorzugt größer 65% ist,
sind,
die Reste R2 unabhängig voneinander gleiche oder verschiedene butylenoxidhaltige Polyetherreste der allgemeinen Formel III sind, mit der Maßgabe, dass sowohl eine statistische als auch eine blockweise Anordnung der Oxyalkylen- und gegebenenfalls Styroloxid-Einheiten vorliegen kann, 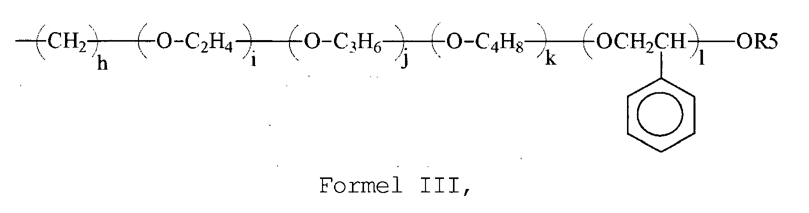 wobei
- h: 3 bis 11, vorzugsweise 3 bis 6, bevorzugt 3,
- i: 0 bis 60, vorzugsweise 1 bis 30,
- j: 0 bis 65, vorzugsweise 0 bis 20,
- k: 1 bis 60, vorzugsweise 2 bis 10,
- 1: 0 bis 60, vorzugsweise 0 bis 30, bevorzugt 0,
die Reste R5 sind unabhängig voneinander gleich oder verschieden und bedeuten Methyl-, Acetyl- oder Wasserstoffrest, bevorzugt Wasserstoff- oder Methylrest, besonders bevorzugt Wasserstoffrest,
die Reste R3 unabhängig voneinander gleiche oder verschiedene Phenolderivate der allgemeinen Formel IV sind 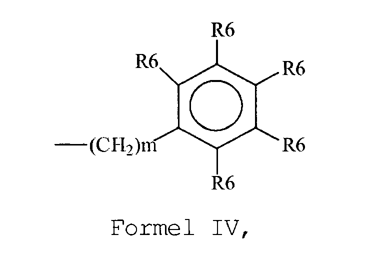 R6 sind unabhängig voneinander gleiche oder verschiedene Reste aus der Gruppe Alkyl, Wasserstoff, Hydroxy oder Alkoxy, mit der Maßgabe, dass mindestens ein Rest R6 eine Hydroxygruppe ist, wobei der Index m eine ganze Zahl von 3 bis 11 ist,
und
die Reste R4 unabhängig voneinander gleiche oder verschiedene Reste R, R1, R2 oder R3 sind.

Die Polyether (Formeln II bzw. IIa und III bzw. IIIa) können durch Anlagerung von Monomeren wie z.B. Ethylenoxid, Propylenoxid, Styroloxid oder Butylenoxid an einen Startalkohol, wie z.B. Allylalkohol erhalten werden. Solche Oxyalkylketten können statistisch angeordnet sein oder eine Blockstruktur haben. Die Herstellung solcher Polyether durch alkalische Katalyse beispielsweise mit Kalium- oder Natriummethylat kann dem Stand der Technik entnommen werden. Der Polyetherrest R1 in Formel II ist vorzugsweise ein hydroxy-funktioneller Polyetherrest. Der Polyetherrest R2 in den Formel III bzw. IIIa ist ein butylenoxidhaltiger Polyether. Insbesondere durch die Anwesenheit eines butylenoxidhaltigen Polyetherrests R2 werden besonders gute Entschäumereigenschaften bei der Verwendung in Kraftstoffzusammensetzungen, die Dieselkraftstoff oder Heizöl und einen Biokraftstoff aufweisen, erzielt.

Die Reste R3 sind vorzugsweise ein Phenol- oder Phenolderivatrest. Beispiele für entsprechende Phenolderivatreste sind Eugenol-Reste und Allylphenol-Reste, wie z. B. ein o-Allylphenol-Rest.

Die organischen Reste können in das Molekül des Polysiloxans durch Addition von ungesättigten Derivaten (z.B. Allyl- oder Vinylderivaten) an SiH-Gruppen des Polysiloxans in Anwesenheit eines Hydrosilylierungskatalysators, z. B. entsprechend dem Verfahren der US-A-5 334 227 oder wie in "Silicones Chemistry and Technology" Vulkan Verlag Essen beschrieben, eingeführt werden.

Durch die Wahl der Reste R1, R2 und R3 sowie das Verhältnis dieser Reste zueinander gelingt es, die Verträglichkeit des Entschäumers zu optimieren und so eine optimale entschäumende Wirkung zu erreichen. Besonders bevorzugt weist die erfindungsgemäße Kraftstoffzusammensetzung ein organomodifiziertes Polyorganosiloxan auf, das ein relativ hochmolekulares Siloxan (mit N ≥ 100, vorzugsweise ≥ 140) ist und bei dem die Reste R1 gleiche oder verschiedene Polyether mit einem Molekulargewicht zwischen 1000 und 2000 g/mol und einem Anteil an Propylenoxid von größer 65 Gew.-% sind, und die Reste R2 butylenoxidhaltige Polyether sind.

Ganz besonders bevorzugt sind solche Kraftstoffzusammensetzungen, die als organomodifiziertes Polysiloxan gemäß Formel I ein erfindungsgemäßes Polysiloxan gemäß Formel Ia enthalten.

Die erfindungsgemäße Dieselzusammensetzung kann entweder kein Wasser enthalten ("trockener Diesel"), oder aber einen signifikanten Wassergehalt aufweisen. Ein solcher "feuchter Diesel" kann z. B. einen Anteil von 250 Massen-ppm Wasser aufweisen und z. B. durch Zugabe von Wasser zu trockenem Diesel erzeugt werden.

Die erfindungsgemäß zu verwendenden organomodifizierten Polysiloxane gemäß Formel I oder Ia können dem Dieselkraftstoff direkt zugesetzt werden. Es ist jedoch in der Praxis bevorzugt, den Entschäumer dem sogenannten Additivpaket zuzusetzen. Das Additivpaket enthält im Wesentlichen ein Detergent, einen Demulgator/Dehazer und Cetan-Zahl-Verbesserer. Um die Verträglichkeit des erfindungsgemäß zu verwendenden organomodifizierten Polysiloxans mit dem Additivpaket zu verbessern, kann es von Vorteil sein, den Entschäumer in einer Mischung von 2-Ethylhexanol oder Glykolen oder aromatenhaltige Lösungsmittel zuzusetzen.

Je nach dem Schaumverhalten des Diesels, kann der Anteil an organomodifiziertem Polysiloxan gemäß Formel I oder Ia in der Kraftstoffzusammensetzung variieren. Vorzugsweise beträgt der Anteil an organomodifiziertem Polysiloxan gemäß Formel I oder Ia in der Kraftstoffzusammensetzung von 2 bis 15 Massen-ppm, besonders bevorzugt von 4 bis 8 Massen-ppm.

Der Anteil an Biokraftstoff in der erfindungsgemäßen Biokraftstoffzusammensetzung kann prinzipiell beliebig sein. Vorzugsweise beträgt in der erfindungsgemäßen Kraftstoffzusammensetzung der Anteil an Biokraftstoff größer gleich 4 Gew.-%, vorzugsweise größer gleich 5 Gew.-%, und besonders bevorzugt größer gleich 10 Gew.-%. In der erfindungsgemäßen Kraftstoffzusammensetzung können einer oder mehrere Biokraftstoffe enthalten sein. Sind mehrere Biokraftstoffe in der erfindungsgemäßen Kraftstoffzusammensetzung enthalten, so beziehen sich die oben gemachten Angaben für den Anteil an Biokraftstoff auf die Summe aller Biokraftstoffe.

Als Biokraftstoff kann die erfindungsgemäße Zusammensetzung z. B. einen Biokraftstoff basierend auf FAME (Fettsäuremethylester), vorzugsweise basierend auf Rapsölmethylester enthalten.

Herstellung des Entschäumers E1:
Eine Mischung aus 22,3 Gew.-% α,ω- und mittelständig SiH-funktionellem Polydimethylsiloxan (mit N = ca. 190 und 0,26 Gew.-% Wasserstoff) wird mit 16,7 Gew.-% aromatenhaltigem Lösungsmittel (Solvesso 150) vorgelegt. Dazu gibt man 43,0 Gew.-% eines mit Allylalkohol gestarteten Copolymers, bestehend aus 80 Gew.-% Propylenoxideinheiten und 20 Gew.-% Ethylenoxideinheiten, mit einer Molmasse von 1400 g/mol (EO/PO-Polyether hergestellt nach dem Stand der Technik durch eine KOH katalysierte Umsetzung). Ferner werden 2,1 Gew.-% Allylphenol und 15,9 Gew.-% eines Allylalkohol gestarteten Copolymers, bestehend aus 12 Ethylenoxid- und 4 Butylenoxideinheiten, (EO/BO-Polyether hergestellt nach dem Stand der Technik durch eine KOH katalysierte Umsetzung) gegeben. Unter Rühren wird auf 90°C aufgeheizt. Es werden 5 Massen-ppm Platin in Form eines Platin-Katalysators zugegeben. Die Umsatzkontrolle mittels SiH-Wert (gasvolumetrische Bestimmung) ergibt nach 5 h 99 % SiH-Umsatz. Das Produkt wird mit 5 % Propylenglykol versetzt.

Herstellung des Entschäumers E2:
Eine Mischung aus 19,9 Gew.-% SiH-funktionellem Polydimethylsiloxan (mit N = ca. 190 und 0,26 Gew.-% Wasserstoff) wird mit 16,7 Gew.-% aromatenhaltigem Lösungsmittel (Solvesso 150) vorgelegt. Dazu gibt man 49,2 Gew.-% eines mit Allylalkohol gestarteten Copolymers, bestehend aus 65 Gew.-% Propylenoxideinheiten und 35 Gew.-% Ethylenoxideinheiten, mit einer Molmasse von 1600 g/mol (EO/PO-Polyether hergestellt nach dem Stand der Technik durch eine KOH-katalysierte Umsetzung). Ferner werden 1,8 Gew.-% Allylphenol und 12,4 Gew.-% eines Allylalkohol gestarteten Copolymers, bestehend aus 12 Ethylenoxid- und 4 Butylenoxideinheiten, (EO/BO-Polyether hergestellt nach dem Stand der Technik durch eine KOH-katalysierte Umsetzung) gegeben. Unter Rühren wird auf 90°C aufgeheizt. Es werden 5 ppm Platin in Form eines Platin-Katalysators zugegeben. Die Umsatzkontrolle mittels SiH-Wert (gasvolumetrische Bestimmung) ergibt nach 5 h 99,5 % SiH-Umsatz. Das Produkt wird mit 5 % Propylenglykol versetzt.

Entschäumungsvermögen:
Zur Prüfung des Entschäumungsvermögens der erfindungsgemäßen Siloxane werden die Entschäumer in einem Additivpaket nach Stand der Technik gelöst. Das Additivpaket wird laut Vorgabe mit 320 Massen-ppm im Diesel eingesetzt. Das Additivpaket enthält den Entschäumer in einer Konzentration, so dass der Entschäumer im Diesel mit 6 Massen-ppm enthalten ist. Der hier verwendete Diesel enthält weniger als 10 Massen-ppm Schwefel.

Als Vergleich werden der handelsübliche Entschäumer TEGOPREN (TP) 5851 (Siliconpolyether-Copolymer, der Goldschmidt GmbH) getestet.

Der Schaumzerfall des mit Additiv und Entschäumer versetzten Diesels wird in einer Druckapparatur (BNPé-Test: Determination of the foaming tendency of diesel fuels, NFM 07-075) getestet. Dieser Test wird wie folgt durchgeführt: 100 ccm Dieselkraftstoff werden in ein Glasrohr gefüllt und mit einem Druck von 0,4 bar beaufschlagt. Über ein Magnetventil am Boden ist das Glasrohr mit einem 250-ccm-Messzylinder verbunden. Über das Ventil wird der Diesel in den Messzylinder injiziert. Nach der Injektion wird die anfängliche Schaumhöhe und die Zeit bestimmt, bis der Schaum zerfallen ist. Die Entschäumungstests werden jeweils mit trockenem und feuchtem B 5-Diesel und B 10-Diesel durchgeführt.

Ergebnisse der Entschäumungstests:
a) B 5-Diesel:
(Blindwert versteht sich als B 5-Diesel & Additivpaket ohne Entschäumer). Unter B 5-Diesel wird eine Mischung von 95 Gew.-% fossilem Diesel (Schwefelgehalt < 10 Massen-ppm) und 5 Gew.-% Rapsölmethylester (Biokraftstoffbeimischung) verstanden.

| Entschäumer | Einsatzkon-entration (ppm) | Schaumhöhe 0 Tage (ml) | Schaumzerfallszeit (s) | Schaumhöhe 28 Tage (ml) | Schaumzerfallszeit (s) |
|---|---|---|---|---|---|
| Blindwert | | 98 | 41 | 102 | 43 |
| E 1 | 6 | 28 | 1 | 37 | 1 |
| E 2 | 6 | 31 | 1 | 38 | 1 |
| TP 5851 | 6 | 38 | 5 | 70 | 12 |

Ergebnisse im feuchten Diesel:
(dem B 5-Diesel wurden 250 Massen-ppm Wasser zugesetzt)

| Entschäumer | Einsatzkonzentration (ppm) | Schaumhöhe 0 Tage (ml) | Schaumzerfallszeit (s) | Schaumhöhe 28 Tage (ml) | Schaumzerfallszeit (s) |
|---|---|---|---|---|---|
| Blindwert | | 107 | 42 | 101 | 44 |
| E 1 | 6 | 31 | 1 | 35 | 1 |
| E 2 | 6 | 35 | 1 | 39 | 1 |
| TP 5851 | 6 | 55 | 8 | 78 | 14 |

b) B 10-Diesel:
(Blindwert versteht sich als B 10-Diesel & Additivpaket ohne Entschäumer). Als B 10-Diesel versteht sich fossiler Diesel (Schwefelgehalt < 10 Massen-ppm Schwefel) dem 10 % Rapsölmethylester (Biokraftstoffbeimischung) zugesetzt wurde.

| Entschäumer | Einsatzkonzentration (ppm) | Schaumhöhe 0 Tage (ml) | Schaumzerfallszeit (s) | Schaumhöhe 28 Tage (ml) | Schaumzerfallszeit (s) |
|---|---|---|---|---|---|
| Blindwert | | 105 | 40 | 100 | 45 |
| E 1 | 6 | 32 | 1 | 39 | 1 |
| E 2 | 6 | 36 | 1 | 40 | 1 |
| TP 5851 | 6 | 48 | 8 | 78 | 16 |

Ergebnisse im feuchten Diesel:
(dem B 10-Diesel wurden 250 Massen-ppm Wasser zugesetzt)

| Entschäumer | Einsatzkonzentration (ppm) | Schaumhöhe 0 Tage (ml) | Schaumzerfallszeit (s) | Schaumhöhe 28 Tage (ml) | Schaumzerfallszeit (s) |
|---|---|---|---|---|---|
| Blindwert | | 110 | 42 | 104 | 44 |
| E 1 | 6 | 31 | 1 | 33 | 1 |
| E 2 | 6 | 30 | 1 | 35 | 1 |
| TP 5851 | 6 | 78 | 18 | 75 | 17 |

## Patentansprüche

1. Organomodifizierte Polysiloxane der allgemeinen Formel Ia 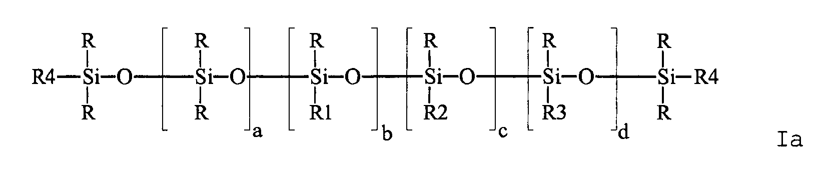 wobei
N a + b + c + d + 2 = 60,5 bis 1000,
a 50 bis 960,
b 4 bis 85,
c 0,5 bis 85,
d 4 bis 85,
sind,
die Reste R unabhängig voneinander gleiche oder verschiedene, aliphatische oder aromatische Kohlenwasserstoffreste mit 1 bis 10 C-Atomen sind,
die Reste R1 unabhängig voneinander gleiche oder verschiedene Polyetherreste der allgemeinen Formel IIa sind, mit der Maßgabe, dass sowohl eine statistische als auch eine blockweise Anordnung der Oxyalkylen-Einheiten vorliegen kann, 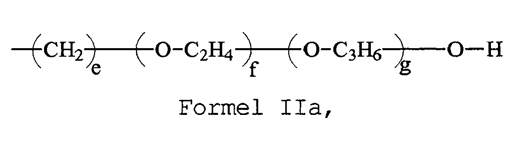 wobei
e 3 bis 11,
f 0 bis 60,
g 0 bis 60,
sind,
die Reste R2 unabhängig voneinander gleiche oder verschiedene butylenoxidhaltige Polyetherreste der allgemeinen Formel IIIa sind, mit der Maßgabe, dass sowohl eine statistische als auch eine blockweise Anordnung der Oxyalkylen- und gegebenenfalls Styroloxid-Einheiten vorliegen kann, 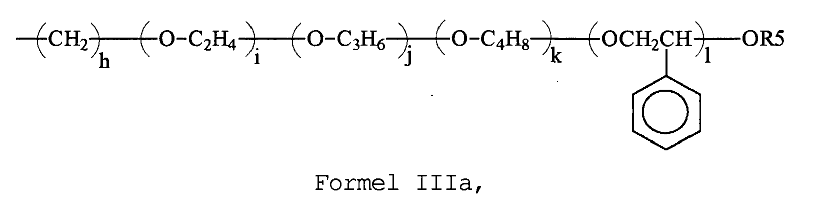 wobei
h 3 bis 11,
i 0 bis 60,
j 0 bis 65,
k 1 bis 60,
l 0 bis 60,
sind,
die Reste R5 unabhängig voneinander gleich oder verschieden sind und Methyl-, Acetyl- oder Wasserstoffrest bedeuten,
die Reste R3 unabhängig voneinander gleiche oder verschiedene Phenolderivate der allgemeinen Formel IVa sind 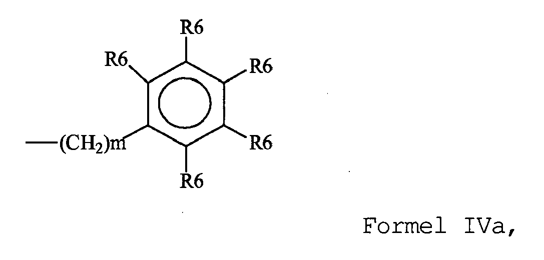 die Reste R6 unabhängig voneinander gleiche oder verschiedene Reste aus der Gruppe Alkyl, Wasserstoff, Hydroxy oder Alkoxy sind, mit der Maßgabe, dass mindestens ein Rest R6 eine Hydroxygruppe ist,
wobei der Index m eine ganze Zahl von 3 bis 11 ist,
und
die Reste R4 unabhängig voneinander gleiche oder verschiedene Reste R, R1, R2 oder R3 sind.

2. Organomodifizierte Polysiloxane gemäß Anspruch 1, **dadurch gekennzeichnet, dass**
N = a + b + c + d + 2 = 120 bis 250,
a = 100 bis 190,
b = 10 bis 20,
c = 0,5 bis 8,
d = 10 bis 20,
R = Methylgruppe,
R1 = unabhängig voneinander gleiche oder verschiedene Polyetherreste der allgemeinen Formel IIa, mit der Maßgabe, dass e = 3, f = 1 bis 20, g = 10 bis 30, das Molekulargewicht des Polyetherrests größer als 1.000 g/mol und der Anteil an Propylenoxid größer 65 Gew-% ist, und
R2 = unabhängig voneinander gleiche oder verschiedene butylenoxidhaltige Polyetherreste der allgemeinen Formel IIIa, mit
h = 3,
i = 1 bis 30,
j = 0 bis 20,
k = 2 bis 10,
l = 0 und
R5 = Wasserstoffrest,
bedeuten.

3. Kraftstoffzusammensetzung enthaltend Dieselkraftstoff oder Heizöl, Biokraftstoff und zumindest einen Entschäumer, **dadurch gekennzeichnet, dass** als Entschäumer organomodifizierte Polysiloxane gemäß Anspruch 1 enthalten sind.

4. Kraftstoffzusammensetzung nach Anspruch 3, **dadurch gekennzeichnet, dass** als organomodifiziertes Polysiloxan ein Polysiloxan gemäß Anspruch 2 enthalten ist.

5. Kraftstoffzusammensetzung nach Anspruch 3 oder 4, **dadurch gekennzeichnet, dass** der Anteil an organomodifiziertem Polysiloxan in der Kraftstoffzusammensetzung von 2 bis 15 Massen-ppm beträgt.

6. Kraftstoffzusammensetzung nach zumindest einem der Ansprüche 3 bis 5, **dadurch gekennzeichnet, dass** der Anteil an Biokraftstoff größer gleich 4 Gew.-% beträgt.

7. Kraftstoffzusammensetzung nach zumindest einem der Ansprüche 3 bis 6, **dadurch gekennzeichnet, dass** als Biokraftstoff ein Biokraftstoff basierend auf Fettsäuremethylester enthalten ist.

## Claims

1. Organically modified polysiloxanes of the general formula Ia 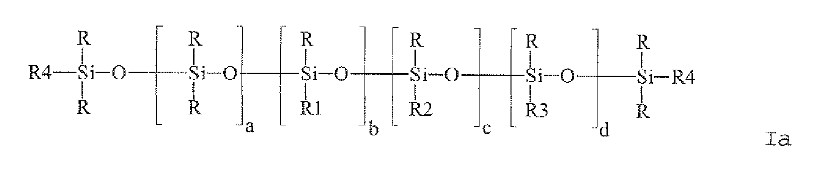 where
N is a + b + c + d + 2 = 60.5 to 1000,
a is 50 to 960,
b is 4 to 85,
c is 0.5 to 85,
d is 4 to 85,
the R radicals are each independently identical or different, aliphatic or aromatic hydrocarbon radicals having 1 to 10 carbon atoms,
the R1 radicals are each independently identical or different polyether radicals of the general formula IIa, with the proviso that either a random or a blockwise arrangement of the oxyalkylene units may be present 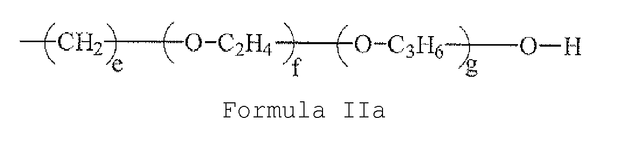 where
e is 3 to 11,
f is 0 to 60,
g is 0 to 60,
the R2 radicals are each independently identical or different butylene oxide-containing polyether radicals of the general formula IIIa, with the proviso that either a random or a blockwise arrangement of the oxyalkylene units and, if present, styrene oxide units may be present 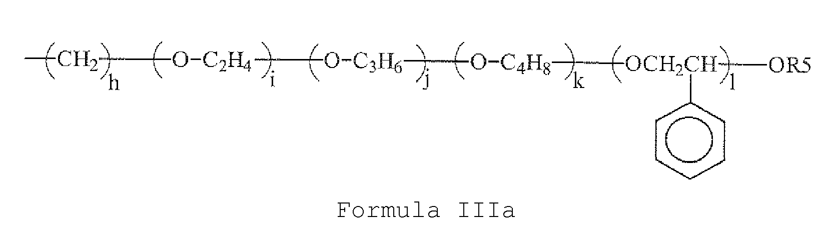 where
h is 3 to 11,
i is 0 to 60,
j is 0 to 65,
k is 1 to 60,
l is 0 to 60,
the R5 radicals are the same or different and are each independently methyl, acetyl or hydrogen radicals,
the R3 radicals are each independently identical or different phenol derivatives of the general formula IVa 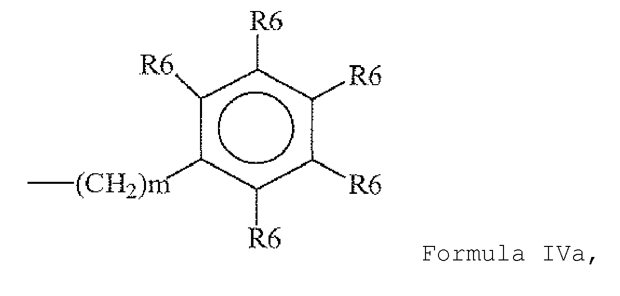 the R6 radicals are each independently identical or different radicals from the group of alkyl, hydrogen, hydroxyl or alkoxy, with the proviso that at least one R6 radical is a hydroxyl group, where the index m is an integer of 3 to 11,
and
the R4 radicals are each independently identical or different R, R1, R2 or R3 radicals.

2. Organically modified polysiloxanes according to Claim 1, **characterized in that**
N = a + b + c + d + 2 = 120 to 250,
a = 100 to 190,
b = 10 to 20,
c = 0.5 to 8,
d = 10 to 20,
R = methyl group,
R1 = each independently identical or different polyether radicals of the general formula IIa, with the proviso that e = 3, f = 1 to 20, g = 10 to 30, the molecular weight of the polyether radical is greater than 1000 g/mol, and the proportion of propylene oxide is greater than 65% by weight, and
R2 = each independently identical or different butylene oxide-containing polyether radicals of the general formula IIIa
where
h = 3,
i = 1 to 30,
j = 0 to 20,
k = 2 to 10,
l = 0 and
R5 = hydrogen radical.

3. Fuel composition comprising diesel fuel or heating oil, biofuel and at least one defoamer, **characterized in that** the defoamers present are organically modified polysiloxanes according to Claim 1.

4. Fuel composition according to Claim 3, **characterized in that** the organically modified polysiloxane is a polysiloxane according to Claim 2.

5. Fuel composition according to Claim 3 or 4, **characterized in that** the proportion of organically modified polysiloxane in the fuel composition is 2 to 15 ppm by mass.

6. Fuel composition according to at least one of Claims 3 to 5, **characterized in that** the proportion of biofuel is greater than or equal to 4% by weight.

7. Fuel composition according to at least one of Claims 3 to 6, **characterized in that** the biofuel present is a biofuel based on fatty acid methyl esters.

## Revendications

1. Polysiloxanes organomodifiés de formule générale Ia 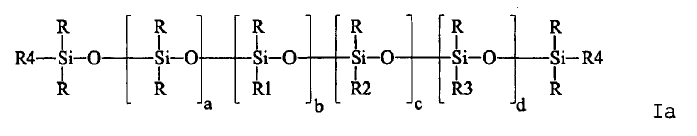 où
N vaut a + b + c + d + 2 = 60,5 à 1000,
a vaut 50 à 960,
b vaut 4 à 85,
c vaut 0,5 à 85,
d 4 à 85,
les radicaux R représentent, indépendamment les uns des autres, des radicaux hydrocarbonés aliphatiques ou aromatiques, identiques ou différents, comprenant 1 à 10 atomes de carbone,
les radicaux R1 représentent, indépendamment les uns des autres, des radicaux polyéther identiques ou différents de formule générale IIa, à condition que les unités d'oxyalkylène puissent se trouver dans une disposition statistique ainsi que par blocs, 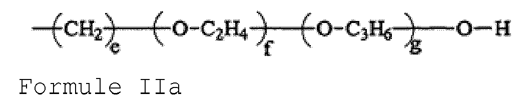 où
e vaut 3 à 11,
f vaut 0 à 60,
g vaut 0 à 60,
les radicaux R2 représentent, indépendamment les uns des autres, des radicaux polyéther contenant de l'oxyde de butylène, identiques ou différents de formule générale IIIa, à condition que les unités d'oxyalkylène et le cas échéant les unités d'oxyde de styrène puissent se trouver dans une disposition statistique ainsi que par blocs, 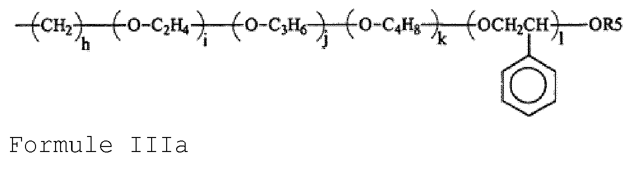 où
h vaut 3 à 11,
i vaut 0 à 60,
j vaut 0 à 65,
k vaut 1 à 60,
l vaut 0 à 60,
les radicaux R5 sont, indépendamment les uns des autres, identiques ou différents et représentent un radical méthyle, acétyle ou hydrogène,
les radicaux R3 représentent, indépendamment les uns des autres, des dérivés phénoliques identiques ou différents de formule générale IVa 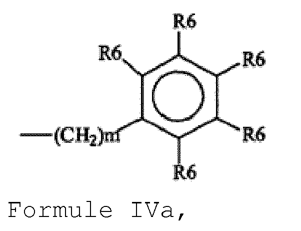 les radicaux R6 représentent, indépendamment les uns des autres, des radicaux identiques ou différents du groupe formé par alkyle, hydrogène, hydroxy ou alcoxy, à condition qu'au moins un radical R6 représente un groupe hydroxy,
l'indice m valant un nombre entier de 3 à 11, et
les radicaux R4 représentent, indépendamment les uns des autres, des radicaux R, R1, R2 ou R3 identiques ou différents.

2. Polysiloxanes organomodifiés selon la revendication 1, **caractérisés en ce que**
N = a + b + c + d + 2 = 120 à 250,
a = 100 à 190,
b = 10 à 20,
c = 0,5 à 8,
d = 10 à 20,
R = un groupe méthyle
R1 = indépendamment les uns des autres, des radicaux polyéther identiques ou différents de formule générale IIa, à condition que e = 3, f = 1 à 20, g = 10 à 30, que le poids moléculaire du radical polyéther soit supérieur à 1000 g/mole et que la proportion d'oxyde de propylène soit supérieure à 65% en poids, et
R2 = indépendamment les uns des autres des radicaux polyéther contenant de l'oxyde de butylène identiques ou différents de formule générale IIIa, avec
h = 3,
i = 1 à 30,
j = 0 à 20,
k = 2 à 10,
l = 0 et
R5 = un radical hydrogène.

3. Composition de carburant contenant du carburant diesel ou du mazout, du biocarburant et au moins un antimousse, **caractérisée en ce que** des polysiloxanes organomodifiés selon la revendication 1 sont contenus comme antimousse.

4. Composition de carburant selon la revendication 3, **caractérisée en ce que** qu'un polysiloxane selon la revendication 2 est contenu comme polysiloxane organomodifié.

5. Composition de carburant selon la revendication 3 ou 4, **caractérisée en ce que** la proportion de polysiloxane organomodifié dans la composition de carburant vaut 2 à 15 ppm en masse.

6. Composition de carburant selon au moins l'une quelconque des revendications 3 à 5, **caractérisée en ce que** la proportion de biocarburant est supérieure à 4% en poids.

7. Composition de carburant selon au moins l'une quelconque des revendications 3 à 6, **caractérisée en ce qu'**un biocarburant à base d'esters méthyliques d'acides gras est contenu comme biocarburant.
